# EUROPEAN PATENT APPLICATION

(11) **EP 4 603 333 A1**
(43) Date of publication of application: **20.08.2025**
(21) Application number: 24204107.7
(22) Date of filing: 02.10.2024
(51) Int. Cl.: B60Q 1/28, B60Q 1/50, F21W 103/60, B60Q 1/00, B60Q 1/26, B60R 19/50, B60R 19/52

(54) **LIGHTING DEVICE FOR VEHICLE**

(30) Priority: 15.02.2024 KR 20240022028
(71) Applicant: Hyundai Mobis Co., Ltd., Gangnam-gu Seoul 06141 (KR)
(72) Inventor: KIM, Do Hyung, 16891 Yongin-si, Gyeonggi-do (KR); KIM, Min Ji, 16891 Yongin-si, Gyeonggi-do (KR); KIM, Phil Su, 16891 Yongin-si, Gyeonggi-do (KR)
(74) Representative: Jung, Minkyu

(57) **Abstract**

A lighting device for a vehicle includes a grille lighting mounted to a grille disposed on a front surface of a vehicle body, through which a three-dimensional first optical image is displayed, and a projection unit mounted to the front surface, be positioned on one side of the grille, and configured to project a second optical image, identical to the first optical image, onto a road surface.

## Description

### BACKGROUND

### Field

Exemplary embodiments of the present disclosure relate to a lighting device for a vehicle and, more particularly, to a lighting device for a vehicle capable of utilizing grille lighting.

### Description of the Related Art

In recent years, there has been an increasing trend in using road-surface projection lighting that incorporates brand identity, and lighting is being actively used to expand the visual presence of vehicles. Vehicle manufacturers are developing road-surface projection lighting technologies to ensure visibility day and night.

Traditionally, there are limitations in lighting content that effectively expresses brand identity, limitations in visibility based on surrounding road conditions and day/night periods, and issues with versatility due to regulatory restrictions such as prohibition on use while driving. Therefore, these limitations and issues require improvement.

The related art of the present disclosure is disclosed in Korean Patent Application Publication No. 10-2023-0077201 (published on June 1, 2023 and entitled "The lighting grille for the electric vehicle").

### SUMMARY

Various embodiments of the present disclosure are directed to a lighting device for a vehicle capable of providing a three-dimensional image to drivers, surrounding vehicles, and pedestrians by utilizing grille lighting.

According to the present disclosure, a lighting device for a vehicle includes a grille lighting mounted to a grille disposed on a front surface of a vehicle body, through which a three-dimensional first optical image is displayed, and a projection unit mounted to the front surface, be positioned on one side of the grille, and configured to project a second optical image, identical to the first optical image, onto a road surface.

The grille lighting may include a housing, a lens attached to the housing and covering an opening defined in the housing, a light source disposed in the housing and configured to emit light to an inner side of the housing, and a three-dimensional plate positioned inside the housing and configured to receive light emitted from the light source, through which the first optical image is displayed onto the lens.

The lighting device for a vehicle may further include a control unit, electrically connected to the grille lighting and the projection unit, configured to receive data for the first optical image to be displayed through the grille lighting, and transmit the data to the projection unit.

The control unit may be electrically connected to the light source and receive operating signals from vehicle electronics to control the light source.

The lighting device for a vehicle may further include a first lamp positioned at a first position on the front surface and configured to emit light toward a front of the vehicle body.

The first position may be an upper side of the grille lighting.

The first lamp may include a head light or a daytime running light.

The lighting device for a vehicle may further include a second lamp positioned at a second position spaced apart from the first position and configured to emit light toward the front of the vehicle body.

The second position may be a lower side of the grille lighting.

The second lamp may include a head light or a daytime running light.

The first lamp and the second lamp may be positioned on both sides of the front surface in a width direction.

The lighting device for a vehicle according to the embodiments of the present disclosure may express brand identity and expand grille lighting content compared to using a small number of LEDs.

Additionally, the lighting device for a vehicle according to the embodiments of the present disclosure may create a distinct welcome image and expand design possibilities by projecting content onto the road surface that is synchronized with the grille lighting.

### BRIEF DESCRIPTION OF THE DRAWINGS

FIG. 1 is a front view of a lighting device for a vehicle according to an embodiment of the present disclosure, viewed from a front of a vehicle body.
FIG. 2 is an exemplary diagram showing a state in which a light source is turned on in a lighting device for a vehicle according to an embodiment of the present disclosure.
FIG. 3 is a schematic cross-sectional view of a grille lighting in a lighting device for a vehicle according to an embodiment of the present disclosure.
FIGS. 4 and 5 are block diagrams showing connections between a control unit and each component in a lighting device for a vehicle according to an embodiment of the present disclosure.

### DETAILED DESCRIPTION

Embodiments of a lighting device for a vehicle according to the present disclosure will be described hereinafter with reference to the accompanying drawings. For clarity and convenience in description, thicknesses of lines, sizes of constituent elements, and the like may be illustrated in a non-exact proportion in the drawings. In addition, the terms used below are defined in consideration of the functions thereof in the present disclosure and may vary depending on the intention of a user or an operator or common practice. Therefore, these terms should be contextually defined in light of the present specification.

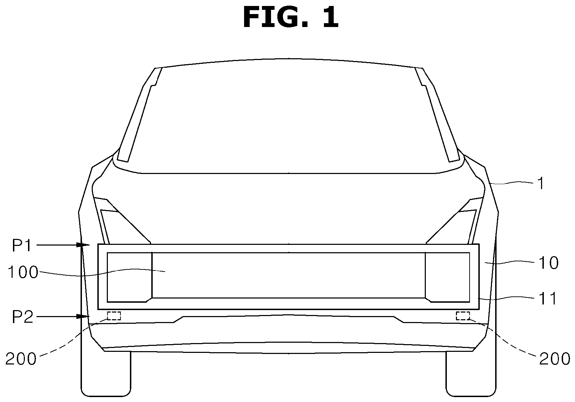

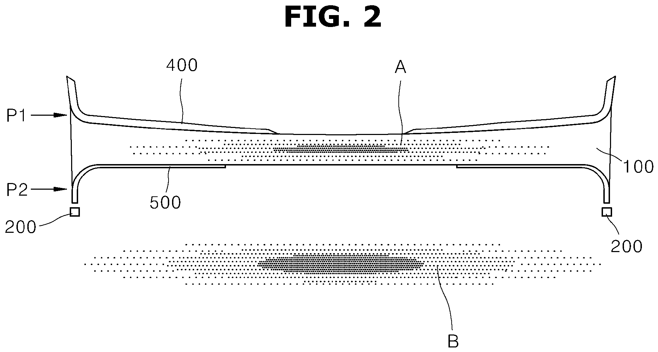

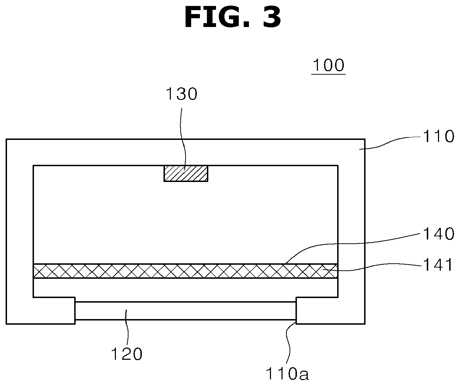

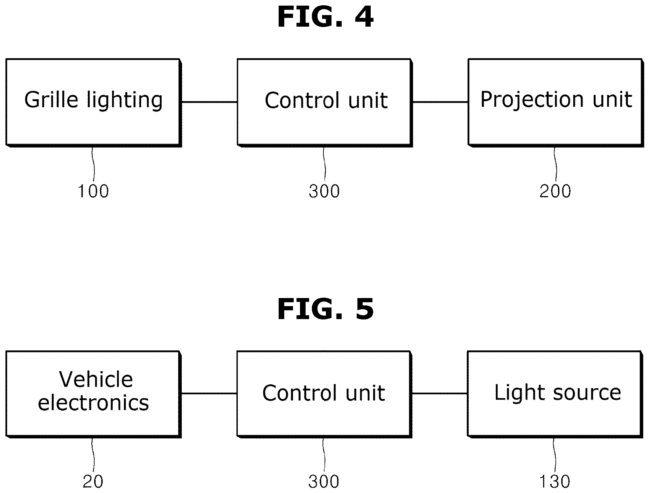

FIG. 1 is a front view of a lighting device for a vehicle according to an embodiment of the present disclosure, viewed from a front of a vehicle body. FIG. 2 is an exemplary diagram showing a state in which a light source is turned on in a lighting device for a vehicle according to an embodiment of the present disclosure. FIG. 3 is a schematic cross-sectional view of a grille lighting in a lighting device for a vehicle according to an embodiment of the present disclosure. FIGS. 4 and 5 are block diagrams showing connections between a control unit and each component in a lighting device for a vehicle according to an embodiment of the present disclosure.

Referring to FIGS. 1 to 5, a lighting device for a vehicle according to an embodiment of the present disclosure includes a grille lighting 100 and a projection unit 200, which will be described in detail below.

The grille lighting 100 may be mounted to a vehicle body 1. The grille lighting 100 may be mounted to a grille 11 disposed on a front surface 10 of the vehicle body 1. In this case, the grille 11 may refer to a part of the front surface 10 of the vehicle body 1 where a radiator grille is mounted.

A three-dimensional first optical image A may be displayed through the grille lighting 100. The grille lighting 100 may include a housing 110, a lens 120, and a light source 130, and a three-dimensional plate 140.

The housing 110 may be mounted to the vehicle body 1. The housing 110 may be mounted to the grille 11 provided on the front surface 10 of the vehicle body 1. The housing 110 may have a box shape and be formed with an open front surface facing the front of the vehicle body 1.

The lens 120 may be attached to the housing 110. The lens 120 may be substantially plate-shaped, and its rim may be securely attached to the housing 110.

The lens 120 may have a planar or curved shape to match a shape of an opening 100a defined in the housing 110. The lens 120 may cover the opening 100a provided in the front surface of the housing 110.

The lens 120 may be exposed to the outside and be made of a transparent material that transmits light. For example, the lens 120 may include plastics such as polycarbonate.

The light source 130 may be installed in the housing 110. The light source 130 may be housed in the housing 110. The light source 130 may be spaced apart from a lens 120 and positioned facing the lens 120.

The light source 130 may emit light to an inner side of the housing 110. Additionally, the light source 130 may emit light in the direction of the three-dimensional plate 140, which will be described below.

The light source 130 may include a light emitting diode (LED) or a light amplification by stimulated emission of radiation (LASER).

The three-dimensional plate 140 may be positioned inside the housing 110. The three-dimensional plate 140 may be positioned between the lens 120 and the light source 130. The three-dimensional plate 140 may be attached to one side of the lens 120 facing the inside of the housing 110.

The three-dimensional first optical image A may be displayed through the three-dimensional plate 140. In one embodiment, the three-dimensional plate 140 may have a shape of a transparent or translucent lens or film that transmits light or reflects light.

The three-dimensional plate 140 may have multiple patterns 141 in various shapes and/or sizes, arranged regularly or irregularly.

The three-dimensional plate 140 may be installed inside the housing 110, through which the three-dimensional first optical image A is generated when the light source 130 is turned on. The three-dimensional plate 140 may receive light emitted from the light source 130, through which the three-dimensional first optical image A is displayed onto the lens 120.

The projection unit 200 may be mounted to the front surface 10 of the vehicle body 1. The projection unit 200 may be positioned on one side of the grille 11. Additionally, the projection unit 200 may be positioned on a lower side of the grille 11. The projection unit 200 may be positioned on both sides of the front surface 10 in the width direction. The projection unit 200 may include projector.

The projection unit 200 may project a second optical image B identical to the first optical image A. The projection unit 200 may project a three-dimensional second optical image B, identical to the first optical image A, onto the road surface in front of the vehicle body 1.

A lighting device for a vehicle according to an embodiment of the present disclosure may further include a control unit 300. The control unit 300 may be provided inside the vehicle body 1 or inside the housing 110.

The control unit 300 may be electrically connected to the grille lighting 100 and electrically connected to the projection unit 200. The control unit 300 may be a printed circuit board (PCB), which is connected to a power supply such as a battery or alternator, mounted on the vehicle body 1 to receive power. The control unit 300 may include controller.

The control unit 300 may receive data for the first optical image A to be displayed through the grille lighting 100 and transmit the data to the projection unit 200.

The control unit 300 may be electrically connected to the light source 130 and receive operational signals from vehicle electronics 20 to control the light source 130.

In this case, the vehicle electronics 20 include: driving devices such as a starting system, a charging system, an ignition system, an engine management system (EMS), an electronic control transmission (ECT) system, a trans-axle control system (TACS), and an electronic control four-wheel drive system (EC 4WD); safety devices such as an anti-lock braking system (ABS), a multi-collision braking system (MCB), an electronic control suspension system (ECS), and an electric power steering system (EPS), a forward/backward collision warning system (FBWS), an adaptive front light system (AFS), a tire pressure warning system (TPWS), a before service warning system (BSWS), and a supplemental restraint system (SRS) airbag; and convenience devices such as a lighting system, an instrument panel, a body comfort system (BCS), an automatic temperature control system (ATCS), an air quality system (AQS), an audio & video (AV) system, and a trip computer.

The control unit 300 may receive operating signals from the vehicle electronics 20 to control the light source 130. Additionally, the control unit 300 may be electrically connected to various vehicle electronics 20 installed in the vehicle and receive operating signals from each of the vehicle electronics 20.

For example, when the control unit 300 receives operating signals from the vehicle electronics 20 that are generated when a passenger approaches the vehicle, unlocks the vehicle's door, or enters the vehicle, the light source 130 may give an impression of a welcome sequence by repeatedly turning its power on and off.

In other words, the three-dimensional first optical image A may be displayed through the grille lighting 100 while repeatedly turning on and off. In this case, the projection unit 200 may project the three-dimensional second optical image B, identical to the first optical image A displayed through the grille lighting 100, onto the road surface in front of the vehicle body 1.

A lighting device for a vehicle according to an embodiment of the present disclosure may further include a first lamp 400 and a second lamp 500.

The first lamp 400 may be mounted on the front surface 10 of the vehicle body 1 and emit a slim beam of light toward the front of the vehicle body 1. The first lamp 400 may be positioned at a first position P1 on the front surface 10. In this case, the first position P1 may refer to an upper side of the grille 11 or an upper side of the grille lighting 100.

The first lamp 400 may be positioned on both sides of the front surface 10 in the width direction. The first lamp 400 may include a head light or a daytime running light. The first lamp 400 may include a light emitting diode (LED).

The second lamp 500 may be mounted on the front surface 10 of the vehicle body 1 and emit a slim beam of light toward the front of the vehicle body 1. The second lamp 500 may be positioned at a second position P2 on the front surface 10, spaced apart from the first position P1. In this case, the second position P2 may refer to a lower side of the grille 11 or a lower side of the grille lighting 100.

The second lamp 500 may be positioned on both sides of the front surface 10 in the width direction. The second lamp 500 may include a head light or a daytime running light. The second lamp 500 may include a light emitting diode (LED).

The lighting device for a vehicle according to the embodiments of the present disclosure may express brand identity and expand grille lighting content compared to using a small number of LEDs.

The lighting device for a vehicle according to the embodiments of the present disclosure may create a distinct welcome image and expand design possibilities by projecting content onto the road surface that is synchronized with the grille lighting.

Although the present disclosure has been described with reference to the embodiments illustrated in the drawings, the embodiments are for illustrative purposes only, and those skilled in the art will appreciate that various modifications and other equivalent embodiments can be made from these embodiments disclosed herein. Thus, the true technical scope of the present disclosure should be defined by the following claims.

## Claims

1. A lighting device for a vehicle, the lighting device comprising:
a grille lighting mounted to a grille disposed on a front surface of a vehicle body, through which a three-dimensional first optical image is displayed; and
a projection unit mounted to the front surface, be positioned on one side of the grille, and configured to project a second optical image, identical to the first optical image, onto a road surface.

2. The lighting device for the vehicle of claim 1, wherein
the grille lighting comprises
a housing;
a lens attached to the housing and covering an opening defined in the housing; a light source disposed in the housing and configured to emit light to an inner side of the housing; and
a three-dimensional plate positioned inside the housing and configured to receive light emitted from the light source, through which the first optical image is displayed onto the lens.

3. The lighting device for the vehicle of claim 1 or 2, further comprising
a control unit, electrically connected to the grille lighting and the projection unit, configured to receive data for the first optical image to be displayed through the grille lighting, and transmit the data to the projection unit.

4. The lighting device for the vehicle of claim 3, wherein the control unit is electrically connected to the light source and receives operating signals from one or more vehicle electronics to control the light source.

5. The lighting device for the vehicle of any one of claims 1 to 4, further comprising
a first lamp positioned at a first position on the front surface and configured to emit light toward a front of the vehicle body.

6. The lighting device for the vehicle of claim 5, wherein the first position is an upper side of the grille lighting.

7. The lighting device for the vehicle of claim 5 or 6, wherein the first lamp includes a head light or a daytime running light.

8. The lighting device for the vehicle of any one of claims 5 to 7, further comprising
a second lamp positioned at a second position spaced apart from the first position and configured to emit light toward the front of the vehicle body.

9. The lighting device for the vehicle of claim 8, wherein the second position is a lower side of the grille lighting.

10. The lighting device for the vehicle of claim 8 or 9, wherein the second lamp includes a head light or a daytime running light.

11. The lighting device for the vehicle of any one of claims 8 to 10, wherein the first lamp and the second lamp are positioned on both sides of the front surface in a width direction.
